# FASCICULE DE BREVET EUROPEEN

(11) **EP 3 694 725 B1**
(45) Date de publication et mention de la délivrance du brevet: **01.12.2021**
(21) Numéro de dépôt: 18793569.7
(22) Date de dépôt: 09.10.2018
(51) Int. Cl.: B42D 25/324, B42D 25/342, B42D 25/328, G02B 3/00, G02B 3/06, G02B 27/60

(54) **COMPOSANT OPTIQUE DE SECURITE VISIBLE EN REFLEXION, FABRICATION D'UN TEL COMPOSANT ET DOCUMENT SECURISE EQUIPE D'UN TEL COMPOSANT**
OPTISCHE, BEI REFLEKTION SICHTBARE SICHERHEITSKOMPONENTE, HERSTELLUNG SOLCH EINER KOMPONENTE UND SICHERES DOKUMENT MIT SOLCH EINER KOMPONENTE
OPTICAL SECURITY COMPONENT VISIBLE IN REFLECTION, MANUFACTURE OF SUCH A COMPONENT, AND SECURE DOCUMENT PROVIDED WITH SUCH A COMPONENT

(30) Priorité: 10.10.2017 FR 1759475
(43) Date de publication de la demande: 19.08.2020
(73) Titulaire: SURYS, 77600 Bussy-Saint-Georges (FR)
(72) Inventeur: DO VALE, Alexandre, 94140 Alfortville (FR)
(74) Mandataire: Osha Liang
(86) Numéro de dépôt international: PCT/EP2018/077496
(87) Numéro de publication internationale: WO 2019/072859

(56) Documents cités:
- AU-A4- 2016 100 402
- US-A1- 2014 367 957

## Description

### DOMAINE TECHNIQUE

La présente description concerne le domaine du marquage de sécurité. Plus particulièrement, elle se rapporte à un composant optique de sécurité visible en réflexion pour vérifier l'authenticité d'un document, à un procédé de fabrication d'un tel composant et à un document sécurisé équipé d'un tel document.

### ETAT DE L'ART

On connaît de nombreuses technologies pour l'authentification de documents ou de produits, et notamment pour la sécurisation de documents tels que des documents de valeur de type billets de banque, des passeports ou autres documents d'identification. Ces technologies visent à la production de composants optiques de sécurité dont les effets optiques en fonction des paramètres d'observation prennent des configurations caractéristiques et vérifiables. Le but général de ces composants optiques est de fournir des effets optiques nouveaux et différenciés, à partir de configurations physiques difficilement reproductibles.

Parmi ces composants, on connait des composants optiques pour l'authentification de documents ou produits, comprenant des matrices de microlentilles pour le grossissement de micro-images par effet de Moiré.

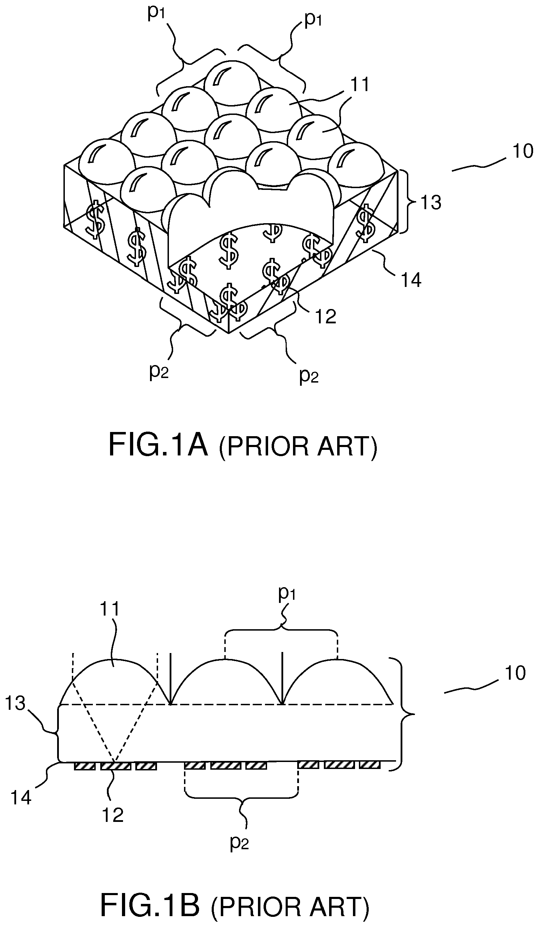

Les FIGS. 1A et 1B illustrent respectivement une vue en perspective et une vue en coupe d'un tel composant optique, décrit dans le brevet US 7738175.

Le composant optique 10 comprend un arrangement périodique selon deux directions (période p₁) d'éléments de micro-focalisation ou microlentilles 11, ces microlentilles définissant un plan focal 14. Le composant optique comprend par ailleurs un arrangement périodique correspondant de micro-images 12, également agencées selon deux directions (période p₂), les micro-images étant situées dans un plan proche du plan focal 14 des microlentilles, et séparé dans cet exemple du plan des microlentilles par un substrat 13 formant un séparateur optique. Comme expliqué par exemple dans l'article de M C Hutley et al. (« The Moiré magnifier », Pure Appl. Opt. 3 (1994) 133 ― 142), un effet de grossissement des micro-images est visible par un observateur, lorsque le rapport des périodes diffère de 1, même très faiblement, ou lorsque les arrangements de microlentilles et de micro-images subissent une rotation l'un par rapport à l'autre. Ce grossissement est connu sous la terminologie de grossissement de Moiré.

Par ailleurs, lorsque le composant subit une rotation en tilt autour d'un axe parallèle à l'une des directions de l'agencement des éléments de focalisation, un observateur perçoit différentes portions des micro-images, entraînant notamment des effets visuels de déplacement des images.

Un tel arrangement à 3 couches (couche supérieure de microlentilles, séparateur optique, couche inférieure supportant les micro-images) présente cependant différents inconvénients. D'une part, le procédé de fabrication d'un tel composant nécessite un positionnement relatif très précis des microlentilles et des micro-images, ce qui peut entrainer des problèmes de reproductibilité et par là des doutes sur l'authenticité du composant de sécurité, lors de la fabrication en grand volume. D'autre part, l'épaisseur minimale du composant optique de sécurité résultant est de l'ordre de quelques dizaines de microns, ce qui est en soi une limitation dans le domaine des composants de sécurité : en effet un composant épais est plus facilement manipulable et donc réutilisable pour une falsification ; par ailleurs, de telles épaisseurs ne sont pas compatibles avec les composants de type DOVID (pour "Diffractive Optical Variable Image Device"), dans lesquels la couche structurée est beaucoup plus fine.

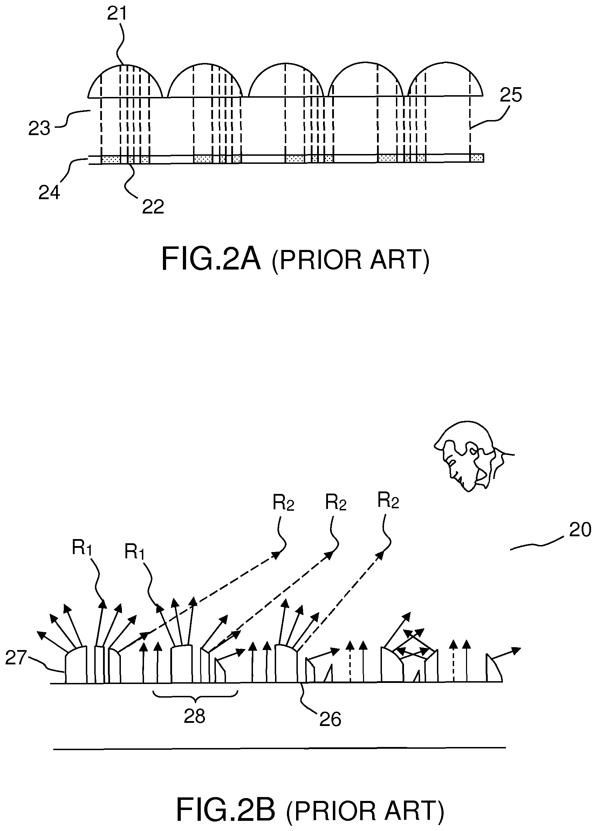

La demande de brevet publiée US 2014/0367957 décrit un composant optique de sécurité avec un effet de grossissement de Moiré, dans lequel l'arrangement traditionnel à 3 couches est remplacé par une couche structurée compatible des procédés de fabrication des composants de type DOVID. La FIG.2B reproduit un tel composant optique.

Le composant optique 20 représenté sur la FIG. 2B est conçu à partir d'un arrangement à 3 couches tel qu'illustré sur la FIG. 2A, et comprenant comme dans les FIGS 1A et 1B, un arrangement périodique de microlentilles 21, un arrangement périodique de micro-images 22, situées dans un plan proche du plan focal 24 des microlentilles au moyen d'un séparateur optique 23. En traçant des lignes de découpage imaginaires 25 qui s'étendent des extrémités des micro-images vers les microlentilles (FIG. 2A), et en retirant aux microlentilles 21 des «tranches» correspondant aux empreintes des micro-images 22, on obtient des éléments en relief 28 (FIG. 2B) caractéristiques des micro-images. Les éléments en relief 28 comprennent des microstructures 27 formées de « tronçons » de microlentilles et qui présentent de ce fait des surfaces externes courbes qui suivent le profil des microlentilles.

Comme illustré sur la FIG. 2B, les surfaces externes courbes des microstructures 27 réfléchissent la lumière incidente suivant les lois de la réflexion, dans toutes les directions (rayons R₁), tandis que les surfaces planes 26 entre les microstructures 27 ne réfléchissent la lumière incidence qu'en réflexion spéculaire. Du point de vue d'un observateur, chaque élément en relief 28 résultant de la structuration d'une microlentille selon l'empreinte d'une micro-image correspondante, présentera un point lumineux visible illustré par le rayon R₂ (rayon en pointillé réfléchi vers l'observateur) et correspondant à une portion de la micro image grossie par effet de Moiré. En appliquant un mouvement de tilt au composant optique 20, les points lumineux visibles par l'observateur proviendront d'autres régions des microstructures 27, ce qui entraînera la formation de nouvelles images pour l'observateur. Ainsi, les images obtenues par grossissement de Moiré pourront présenter, outre un effet de grandissement, des effets visuels dynamiques de mouvement et d'autres effets résultant des caractéristiques spécifiques des microlentilles, comme par exemple des effets de profondeur.

Le composant optique décrit sur la FIG. 2B présente des effets comparables à ceux illustrés sur les FIGS 1A et 1B, avec notamment un grossissement de Moiré de micro-images et des effets visuels dynamiques lorsque le composant subit une rotation en tilt, mais a l'avantage notamment d'une meilleure reproductibilité lors de la fabrication, la matrice de micro-images se trouvant automatiquement positionnée par rapport à celle des microlentilles.

Cependant, les déposants ont montré qu'un tel composant optique de sécurité présente un effet inévitable d'inversion de contraste très fort à la réflexion spéculaire, qui nuit à la compréhension du mouvement pour un observateur.

US 2014/367957 A1 ne divulgue pas que ladite interface réflective comprend au moins une première structure optique avec des premières surfaces élémentaires et des deuxièmes surfaces élémentaires, les contours desdites premières et deuxièmes surfaces élémentaires étant complémentaires en vue de dessus, les premières surfaces élémentaires suivent le profil d'une première matrice à une dimension de premières microlentilles cylindriques identiques entre elles, agencées périodiquement selon une première direction, avec une première période; les deuxièmes surfaces élémentaires suivent le profil d'une deuxième matrice à une dimension de deuxièmes microlentilles cylindriques identiques entre elles, superposée à ladite première matrice, la courbure desdites deuxièmes microlentilles cylindriques étant inférieure à celles desdites premières microlentilles cylindriques. US 2014/367957 A1 ne divulgue (voir en particulier fig. 3-4) que des premières surfaces élémentaires, et pas de deuxièmes surfaces élémentaires.

La présente demande décrit un composant optique de sécurité avec une structure originale présentant, comme dans le composant illustré sur la FIG. 2B, des effets visuels de grossissements de Moiré de micro-images et qui soit compatible des procédés de fabrication des composants de type DOVID. Le composant optique de sécurité selon la présente demande permet en plus pour un observateur, lorsque le composant subit un mouvement de tilt, l'observation d'un mouvement ininterrompu sans « accident » de contraste à la réflexion spéculaire, et de ce fait, une plus grande facilité de contrôle et une authentification encore plus robuste.

### RESUME

Selon un premier aspect, l'invention concerne un composant optique de sécurité destiné à être observé en réflexion, à l'œil nu, selon au moins une première face d'observation, et comprenant :
- une première couche en matériau diélectrique, au moins partiellement transparente dans le visible, présentant un premier indice de réfraction,
- une deuxième couche réflective formant une interface réflective avec ladite première couche dans au moins une première résion,
dans lequel :
- ladite interface réflective comprend au moins une première structure optique formant des premières surfaces élémentaires et des deuxièmes surfaces élémentaires, les contours desdites premières et deuxièmes surfaces élémentaires étant complémentaires en vue de dessus,
- les premières surfaces élémentaires suivent le profil d'une première matrice de premières microlentilles cylindriques identiques entre elles, agencées périodiquement selon une première direction, avec une première période ;
- les deuxièmes surfaces élémentaires suivent le profil d'une deuxième matrice de deuxièmes microlentilles cylindriques identiques entre elles, superposée à ladite première matrice, la courbure des deuxièmes microlentilles cylindriques étant inférieure à celle des premières microlentilles cylindriques;
- lesdites premières surfaces élémentaires ou lesdites deuxièmes surfaces élémentaires présentent des contours formant, en vue de dessus, des micro-images reconnaissables, agencées périodiquement selon une deuxième direction avec une deuxième période, le composant optique présentant en réflexion et sous l'effet d'un mouvement de tilt autour d'un axe perpendiculaire à ladite première direction, un grossissement et un déplacement desdites premières micro-images par grossissement de Moiré.

Une couche « au moins partiellement transparente dans le visible» est définie, au sens de la présente description, comme une couche présentant une transmission d'au moins 70%, de préférence au moins 80%, dans au moins une sous-bande spectrale du visible.

Un tel composant optique de sécurité présente, en réflexion et sous l'effet d'un mouvement de tilt autour d'un axe perpendiculaire à ladite première direction, un grossissement des micro-images par grossissement de Moiré et un effet de mouvement des images agrandies ininterrompu, c'est-à-dire sans « accident » de contraste à la réflexion spéculaire, cet effet résultant des courbures non nulles et différentes des premières surfaces élémentaires et des deuxièmes surfaces élémentaires.

Les premières microlentilles cylindriques et les deuxièmes microlentilles cylindriques sont définies par des tronçons de cylindres au sens large, c'est-à-dire des formes obtenues en faisant translater une courbe selon une génératrice. La génératrice des cylindres est perpendiculaire à ladite première direction d'agencement des microlentilles cylindriques. La courbe peut être une portion de cercle, de parabole, ou de toute autre forme.

Les premières microlentilles cylindriques et les deuxièmes microlentilles cylindriques sont soit toutes concaves, vue de ladite première face d'observation, soit toutes convexes, vue de ladite première face d'observation.

Par rapport à des microlentilles sphériques, les microlentilles cylindriques sont plus lumineuses en réflexion; par ailleurs, en observation sous une source étendue, les lentilles cylindriques permettent de réduire l'effet flou caractéristique des lentilles sphériques qui renvoient chacune une image différente vers l'oeil de l'observateur / vers le dispositif de capture d'image. Avec un seul axe de tilt efficace, la stabilité de l'image observée est ainsi améliorée quelle que soit la source d'éclairage et l'authentification du composant optique de sécurité plus facile pour un observateur.

Au sens de la présente description, « une courbure des deuxièmes microlentilles cylindriques inférieure à la courbure des premières microlentilles cylindriques » signifie qu'en tout point de ladite deuxième matrice de deuxièmes microlentilles cylindriques, ou quasiment en tout point, le rayon de courbure est strictement supérieur à celui de ladite première matrice des premières microlentilles cylindriques au niveau de ce point.

Les première et deuxième matrices de premières microlentilles cylindriques et de deuxièmes microlentilles cylindriques sont superposées, c'est-à-dire disposées l'une au-dessus de l'autre dans une direction normale au plan du composant, de telle sorte à ce qu'une première lentille cylindrique coïncide avec une deuxième lentille cylindrique ; les deuxièmes microlentilles cylindriques sont ainsi agencées suivant la même première direction, et avec la même première période que les premières microlentilles cylindriques.

Par mouvement de tilt, on entend une rotation du composant autour d'un axe perpendiculaire à ladite première direction (ou parallèle à la génératrice des cylindres formant lesdites premières et deuxièmes microlentilles cylindriques). L'angle de tilt est par exemple de +/- 45°, de préférence +/- 30° autour d'une position nominale d'observation. La position nominale d'observation est définie par exemple pour une observation sous éclairage vertical, par un composant incliné de telle sorte à présenter un angle donné entre la normale au composant et la direction verticale, par exemple un angle compris entre 30 degrés et 45 degrés au sens large.

Selon un ou plusieurs exemples de réalisation, les deuxièmes surfaces élémentaires, de rayons de courbure plus grands, présentent des contours formant, en vue de dessus, des micro-images reconnaissables. Ces micro-images apparaissent agrandies et plus lumineuses par rapport à un « fond » plus sombre. On parle dans la présente description d'une observation des images « en positif ».

Selon un ou plusieurs exemples de réalisation, les premières surfaces élémentaires, de rayons de courbure plus petits, présentent des contours formant, en vue de dessus, des micro-images reconnaissables. Ces micro-images apparaissent agrandies et moins lumineuses par rapport à un « fond » plus lumineux. On parle dans la présente description d'une observation des images « en négatif ».

Dans les deux cas, l'effet de grossissement de Moiré n'apparaît que selon ladite première direction d'agencement des microlentilles, du fait de l'utilisation de microlentilles cylindriques. Dans la direction perpendiculaire à ladite première direction d'agencement des microlentilles (direction parallèle à la génératrice des cylindres), il n'y a pas de déformation des micro-images.

Les micro-images peuvent comprendre, de façon non limitative, des caractères alphanumériques, des éléments géométriques simples ou complexes, des éléments graphiques. En pratique, du fait du grossissement sélectif selon un seul axe, elles sont conçues au niveau du composant optique de sécurité de façon déformée, de telle sorte à apparaître non déformées pour un observateur, après effet de grossissement de Moiré.

Selon un ou plusieurs exemples de réalisation, la première direction d'agencement des microlentilles cylindriques et la deuxième direction d'agencement des micro-images sont colinéaires ; dans ce cas, lesdites première et deuxième périodes sont différentes pour assurer l'effet de grossissement de Moiré.

Selon un ou plusieurs exemples de réalisation, ladite première période d'agencement des microlentilles est comprise entre 10 µm et 300 µm, avantageusement entre 20 µm et 150 µm, et ladite deuxième période d'agencement des micro-images est égale à ladite première période plus ou moins un pourcentage de ladite première période, le pourcentage étant compris entre 0,1% et 10%, avantageusement entre 0,1% et 5%.

Selon un ou plusieurs exemples de réalisation, la première direction d'agencement des microlentilles cylindriques et la deuxième direction d'agencement des micro-images forment un angle non nul, par exemple un angle compris entre 0,1 degrés et 5 degrés, avantageusement entre 0,1 degrés et 3 degrés. Dans ce cas, les première et deuxième périodes peuvent être identiques, par exemple comprises entre 10 µm et 300 µm, ou différentes.

Selon un ou plusieurs exemples de réalisation, une largeur maximale des premières et deuxièmes microlentilles cylindriques, mesurée selon ladite première direction d'agencement, est inférieure à 300 µm ; cela permet que les microlentilles ne soient pas individuellement visibles à l'oeil nu.

Selon un ou plusieurs exemples de réalisation, le nombre minimal de premières et deuxièmes microlentilles cylindriques est déterminé en fonction de la largeur maximale des microlentilles cylindriques, de telle sorte que des effets visuels soient visibles à l'oeil nu. Ainsi, selon un ou plusieurs exemples de réalisation, une dimension minimale de la première structure selon ladite première direction d'agencement des microlentilles pourra être supérieure à 1 mm, de préférence supérieure à 2 mm, de préférence supérieure à 5 mm.

Selon un ou plusieurs exemples de réalisation, une longueur minimale desdites premières et deuxièmes microlentilles cylindriques est déterminé de telle sorte que des effets visuels soient visibles à l'œil nu, selon la direction perpendiculaire à ladite première direction d'agencement des microlentilles (direction parallèle à la génératrice). Ainsi, selon un ou plusieurs exemples de réalisation, une longueur minimale desdites premières et deuxièmes microlentilles cylindriques selon la direction perpendiculaire à ladite première direction d'agencement des microlentilles est supérieure à 1 mm, de préférence supérieure à 2 mm, de préférence supérieure à 5 mm.

Selon un ou plusieurs exemples de réalisation, la hauteur de ladite première structure, définie dans une direction perpendiculaire au plan du composant, est comprise entre 2 µm et 20 µm, de préférence entre 3 µm et 10 µm.

Selon un ou plusieurs exemples de réalisation, la différence de hauteur maximale entre ladite première matrice de premières microlentilles cylindriques et ladite deuxième matrice de deuxièmes microlentilles cylindriques, définie dans une direction perpendiculaire au plan du composant, est comprise entre 400 nm et 10 µm, de préférence entre 600 nm et 3 µm.

Selon un ou plusieurs exemples de réalisation, la deuxième couche est formée par une couche métallique, par exemple une couche en Aluminium, Cuivre, Chrome, Argent ou un alliage de ces métaux.

Selon un ou plusieurs exemples de réalisation, la deuxième couche est formée par une couche dite de variation d'indice, présentant un indice de réfraction différent de celui des couches avoisinantes, de préférence telle que la différence des valeurs d'indice de réfraction soit au moins égale à 0,3, avantageusement au moins égale à 0,5.

Selon un ou plusieurs exemples de réalisation, le composant présente en outre une troisième couche d'encapsulation en matériau diélectrique, ladite deuxième couche réflective étant encapsulée entre lesdites première et troisième couches.

Selon un ou plusieurs exemples de réalisation, au moins une desdites premières surfaces élémentaires ou desdites deuxièmes surfaces élémentaires sont nanostructurées de telle sorte à former un réseau mono ou bidimensionnel.

Selon un ou plusieurs exemples de réalisation, ledit réseau mono ou bidimensionnel présente une période comprise entre 100 nm et 700 nm, avantageusement entre 200 nm et 500 nm, déterminé pour produire, après dépôt de la deuxième couche réflective, un filtre résonant dans une première bande spectrale.

Selon un ou plusieurs exemples de réalisation, à la fois les premières surfaces élémentaires et les deuxièmes surfaces élémentaires sont nanostructurées pour former respectivement un premier réseau et un deuxième réseau mono ou bidimensionnel, les périodes desdits premier et deuxième réseaux et/ou leurs orientations azimutales étant différentes, pour former par exemple des filtres résonants dans respectivement une première bande spectrale et une deuxième bande spectrale différente de la première bande spectrale.

Selon un ou plusieurs exemples de réalisation, la profondeur de modulation du réseau mono ou bidimensionnel, définie dans une direction perpendiculaire au plan du composant, est comprise entre 50 nm et 500 nm, de préférence entre 50 nm et 300 nm.

Selon un ou plusieurs exemples de réalisation, ladite deuxième couche réflective est une couche métallique et ledit premier réseau, sub longueur d'onde, est adapté pour former des résonances plasmoniques dans ladite première bande spectrale. Des effets visuels colorés liés aux résonances plasmoniques pourront être observés en réflexion dans le cas d'une couche métallique suffisamment épaisse, et en transmission, dans le cas d'une couche métallique suffisamment fine et avec une encapsulation de la couche métallique entre deux couches en matériau diélectrique.

Selon un ou plusieurs exemples de réalisation, le composant présente en outre une troisième couche d'encapsulation, et ladite deuxième couche réflective est une couche en matériau diélectrique, présentant un indice de réfraction différent de celui desdites première et troisième couches diélectriques. Ledit premier réseau sub longueur d'onde est alors adapté pour former des résonances de type guide d'onde dans ladite première bande spectrale. Selon un ou plusieurs exemples de réalisation, la différence des valeurs d'indice de réfraction est au moins égale à 0,3, avantageusement au moins égale à 0,5.

Dans tous les cas, une nano structuration des premières ou des deuxièmes surfaces élémentaires de l'interface sous forme d'un réseau mono ou bidimensionnel permet de former un effet de fond ou d'image colorée et d'améliorer encore le contraste fond/image.

Selon un ou plusieurs exemples de réalisation, au moins une desdites premières surfaces élémentaires ou desdites deuxièmes surfaces élémentaires sont nanostructurées pour former une nanostructure diffusante. Une nano structuration diffusante des premières ou des deuxièmes surfaces élémentaires de l'interface permet d'améliorer encore le contraste fond/image.

Par nanostructure diffusante, on comprend au sens de la présente description un microrelief formé de pics et/ou de vallées positionnés de manière aléatoire, la hauteur des pics et la profondeur des vallées étant chacune sensiblement inférieures à 1 µm. Selon un ou plusieurs exemple de réalisation, la hauteur des pics et la profondeur des vallées est chacune comprises entre 50 et 200 nm, de préférence comprises entre 100 et 160 nm, par exemple environ 130 nm. Selon un ou plusieurs exemple de réalisation, la hauteur des pics et la profondeur des vallées sont encore dans ces plages de valeurs, mais distinctes l'une de l'autre. L'efficacité du caractère dispersif de la nanostructure diffusante est dépendante de la densité et de la taille des pics et des vallées, qui peuvent être fixées par l'homme du métier selon le produit souhaité.

Selon un ou plusieurs exemples de réalisation, à la fois les premières surfaces élémentaires et les deuxièmes surfaces élémentaires sont nanostructurées pour former des nanostructures diffusantes, les caractéristiques des nanostructures diffusantes étant différentes pour avoir respectivement un premier type de diffusion et un deuxième type de diffusion, différenciable à l'oeil du premier type de diffusion; par exemple la hauteur des pics et/ou la profondeur des vallées et/ou la densité des pics et/ou des vallées est différente pour les deux nanostructures diffusantes.

Le composant optique de sécurité selon le premier aspect peut comprendre une ou plusieurs couche(s) additionnelle(s) en fonction des besoins de l'application, sans que cette ou ces couche(s) additionnelle(s) ne contribuent à l'effet visuel recherché.

Ainsi, selon un ou plusieurs exemples de réalisation, le composant optique de sécurité est adapté à la sécurisation d'un document ou d'un produit, et comprend en outre, sur la face opposée à la face d'observation, une couche adaptée pour le transfert du composant sur le document ou le produit, par exemple une couche d'adhésif permanent ou une couche d'adhésif ré-activable.

Selon un ou plusieurs exemples de réalisation, le composant optique de sécurité comprend en outre, du côté de la première face d'observation, un film support destiné à être détaché après transfert du composant sur le document ou le produit.

Selon un ou plusieurs exemples de réalisation, le composant optique de sécurité comprend du côté de la première face d'observation et/ou sur la face opposée à la première face d'observation, une ou plusieurs couches de protection.

Selon un ou plusieurs exemples de réalisation, la ou lesdites plusieurs couches de protection sont au moins partiellement transparentes dans le visible, permettant en outre une observation du composant optique de sécurité selon une deuxième face d'observation, opposée à ladite première face d'observation.

Un tel composant optique de sécurité est adapté par exemple à la fabrication d'un fil de sécurité pour la sécurisation des billets de banque, cartes de paiement et autres documents de sécurité.

Selon un deuxième aspect, la présente description concerne des procédés de fabrication de composants optiques de sécurité selon le premier aspect.

Selon un ou plusieurs exemples de réalisation, le procédé de fabrication comprend :
- le dépôt sur un film support de ladite première couche en matériau diélectrique ;
- la formation par réplication sur ladite première couche de ladite au moins première structure ;
- le dépôt sur ladite première couche en matériau diélectrique structurée d'une couche réflective pour former ladite interface réflective.

### BREVE DESCRIPTION DES FIGURES

D'autres caractéristiques et avantages de l'invention apparaîtront à la lecture de la description qui suit, illustrée par les figures suivantes :
- FIGS. 1A et 1B, déjà décrites, des exemples de composants optiques de sécurité avec grossissement de micro-images par grossissement de Moiré, selon l'état de l'art ;
- FIGS. 2A et 2B, déjà décrites, d'autres exemples de composants optiques de sécurité avec grossissement de micro-images par grossissement de Moiré, selon l'état de l'art ;
- FIGS. 3A et 3B, des vues en coupe d'exemples de réalisation de composants selon la présente description ;
- FIGS. 4A à 4D, des schémas illustrant, selon des vues de coupe, différents exemples de l'interface entre la première couche en matériau diélectrique et la deuxième couche réfléchissante, dans un composant optique selon la présente description;
- FIGS. 5A et 5B, des schémas illustrant, selon des vues de dessus, des exemples de matrices de microlentilles cylindriques et de micro-images, dans le cas où les micro-images sont agencées dans la même direction et avec une période différente de celle des microlentilles (5A) et dans le cas où les micro-images sont agencées dans une direction faisant un angle non nul avec la direction d'agencement des microlentilles (5B) ;
- FIG. 6, des schémas illustrant des effets visuels comparatifs entre un composant optique de sécurité selon l'état de l'art et des exemples de composants optiques de sécurité selon la présente description;
- FIGS. 7A ― 7I, des étapes de réalisation d'une matrice pour la formation d'un composant optique de sécurité selon la présente description.

### DESCRIPTION DETAILLEE

Sur les figures, les éléments ne sont pas représentés à l'échelle pour une meilleure visibilité.

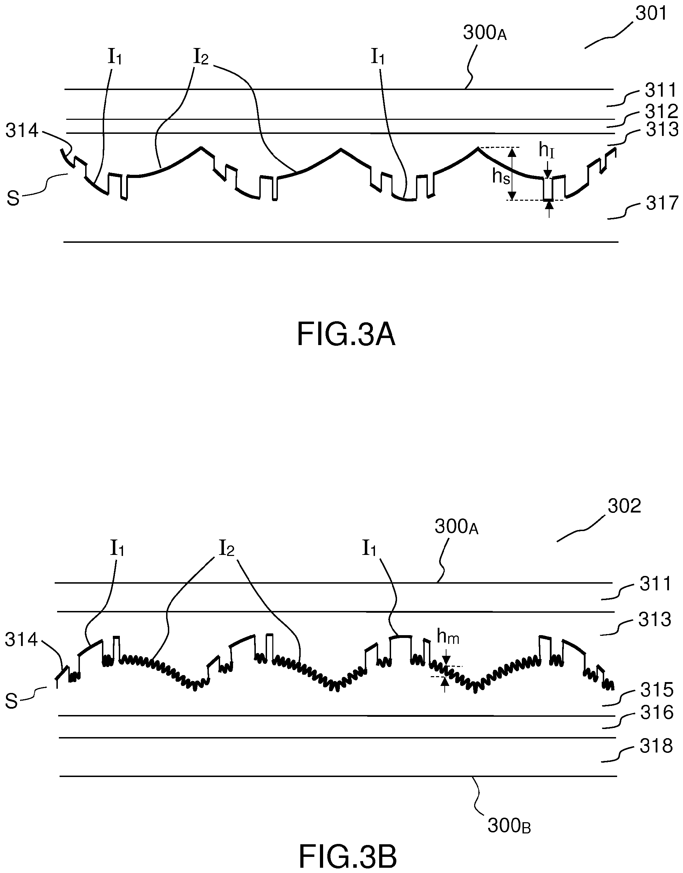

Les FIGS. 3A et 3B représentent selon des vues en coupe (partielles) deux exemples de composants optiques de sécurité selon la présente description.

Le composant optique de sécurité 301 représenté sur la FIG. 3A représente par exemple un composant optique de sécurité destiné par exemple à être transféré sur un document ou un produit en vue de sa sécurisation. Il comprend selon cet exemple un film support 311, par exemple un film en matériau polymère, par exemple un film en polyéthylène téréphtalate (PET) de quelques dizaines de micromètres, typiquement 15 à 100 µm, ainsi qu'une couche de détachement 312, par exemple en cire naturelle ou synthétique. La couche de détachement permet de retirer le film support en polymère 311 après transfert du composant optique sur le produit ou document à sécuriser. Le composant optique de sécurité 301 comprend par ailleurs une première couche 313 en matériau diélectrique, présentant un premier indice de réfraction n₁ et une deuxième couche réflective 314 formant avec la première couche 313 en matériau diélectrique, une interface réflective. Ladite interface réflective forme dans au moins une première région, une première structure S, dont la hauteur selon une direction perpendiculaire au plan du composant est référencée h_{S}, et qui présente des surfaces élémentaires I₁, I₂ qui seront décrites plus en détails par la suite.

La deuxième couche 314 est par exemple une couche métallique, par exemple une couche en Aluminium, Cuivre, Chrome, Argent ou un alliage de ces métaux, et son épaisseur est par exemple comprise entre 20 nm et 80 nm.

La deuxième couche 314 peut être également une couche dite de variation d'indice, présentant un indice de réfraction différent de celui des couches avoisinantes, la différence d'indice entre les couches 313 et 314 présentant une valeur au moins égale à 0,3, de préférence égale à 0.5. Des matériaux pour des couches de variation d'indice sont par exemple décrits dans le brevet US 4856857 par exemple, la deuxième couche 314 est une couche en TiO₂ ou en ZnS, d'épaisseur comprise entre 40 et 150 nm.

La couche 314 permet d'assurer la réflexion de la lumière incidente.

Le composant optique de sécurité comprend par ailleurs une ou plusieurs couches non fonctionnelles optiquement mais adaptées à l'application, par exemple, dans l'exemple de la FIG. 3A, une couche d'adhésif 317, par exemple une couche d'adhésif ré-activable à chaud, pour le transfert du composant optique de sécurité sur le produit ou document.

En pratique, comme cela sera détaillé par la suite, le composant optique de sécurité peut être fabriqué en empilant les couches 312 et 313 sur le film support 311, puis la couche 313 est structurée pour former ladite première structure S et recouverte par la couche réflective 314 pour former l'interface réflective. La couche d'adhésif 317 est ensuite déposée. Le composant peut alors être transféré sur un document/produit à sécuriser grâce à la couche 317. Optionnellement, le film support 311 peut être détaché, par exemple au moyen de la couche de détachement 312. La face principale d'observation 300_{A} du composant optique de sécurité se trouve ainsi du côté de la face de la première couche 313 opposée à l'interface avec la couche réflective 314. La structure est ainsi encapsulée, donc protégée contre les dégradations naturelles (type salissure) ou contre les attaques d'un contrefacteur.

Le composant optique de sécurité 302 représenté sur la FIG. 3B représente par exemple un composant optique de sécurité destiné par exemple à la sécurisation de billets de banque, cartes de paiement ou autre documents fiduciaires; il s'agit par exemple d'une partie d'un fil de sécurité destiné à être intégré dans le papier pendant la fabrication du billet. Dans cet exemple, le composant 302 comprend comme précédemment un film support 311 (10 à 40 µm) qui pourra servir également de film de protection au fil de sécurité, et, comme dans l'exemple de la FIG. 3A, une première couche 313 en matériau diélectrique présentant un premier indice de réfraction n₁, et une deuxième couche réflective 314 formant avec la première couche 313 en matériau diélectrique une interface réflective formant la première structure S avec les premières et deuxièmes surfaces élémentaires I₁, I₂. Dans cet exemple, une partie des surfaces élémentaires sont nanostructurées pour former des surfaces diffusantes ou un réseau mono ou bidimensionnel, comme cela sera décrit plus en détails par la suite.

Le composant optique de sécurité 302 comprend par ailleurs, dans l'exemple de la FIG. 3B, un ensemble des couches 315, 316, 318, respectivement une couche d'encapsulation 315, une couche de contraste colorée 316 facultative, qui peut être opaque et/ou discontinue, et une couche de protection 318, par exemple un deuxième film polymère ou un vernis. Comme dans l'exemple précédent, la fabrication peut être réalisée par empilement des couches sur le film support 311. La couche de protection 318 est ensuite déposée pour donner au fil de sécurité la résistance physico-chimique nécessaire. Les couches d'encapsulation 315 et de contraste colorée 316 sont optionnelles ; elles peuvent également ne former qu'une seule couche. La couche de protection 318 et la couche d'encapsulation 315 peuvent également ne former qu'une seule et même couche présentant les deux fonctions.

Il apparaitra à l'homme du métier que d'autres couches non fonctionnelles optiquement peuvent être ajoutées en fonction des besoins de l'application dans chacun des exemples représentés sur les FIGS. 3A et 3B et que les variantes de réalisation présentées sur les FIGS. 3A et 3B peuvent être combinées ; notamment, les interfaces réflectives représentées sur les FIGS. 3A et 3B sont aussi bien adaptées à un composant optique de sécurité destiné à être transféré sur un document ou un produit en vue de sa sécurisation qu'à un composant optique de sécurité destiné à la sécurisation intrinsèque du papier de billets de banque.

A noter que si les couches additionnelles, non fonctionnelles optiquement, par exemple la couche 317, ou les couches 315, 316, 318, sont au moins partiellement transparentes dans le visible, ainsi que le support de destination, le composant optique de sécurité pourra être observé non seulement selon la première face d'observation 300_{A} (recto) mais aussi selon une deuxième face d'observation 300_{B}, opposée à ladite première face d'observation (verso). Selon l'observation recto ou verso, une inversion des courbures des surfaces élémentaires formant l'interface réflective permettra une observation différenciée caractérisée notamment par une inversion des effets de mouvement.

Un tel composant optique de sécurité est par exemple adapté à la sécurisation d'un document de sécurité de type billet de banque ou carte, comprenant une fenêtre de transparence pour une observation recto/verso.

Par ailleurs, dans un composant optique de sécurité tel que représenté par exemple sur l'une ou l'autre des figures 3A et 3B, l'interface réflective peut présenter au moins une deuxième structure (non représentée sur les FIGS. 3A, 3B), permettant de juxtaposer ou d'imbriquer différents effets résultant de structures telles que décrites dans la présente demande ou d'autres effets visuels, par exemple de type DOVID.

Dans un composant optique de sécurité selon la présente description, la deuxième couche réflective 314 peut également être interrompue, par exemple au moyen de démétallisation partielles, formant alors différentes régions, chaque région pouvant comprendre une ou plusieurs structures. Les différentes régions peuvent former des motifs juxtaposés ou imbriqués.

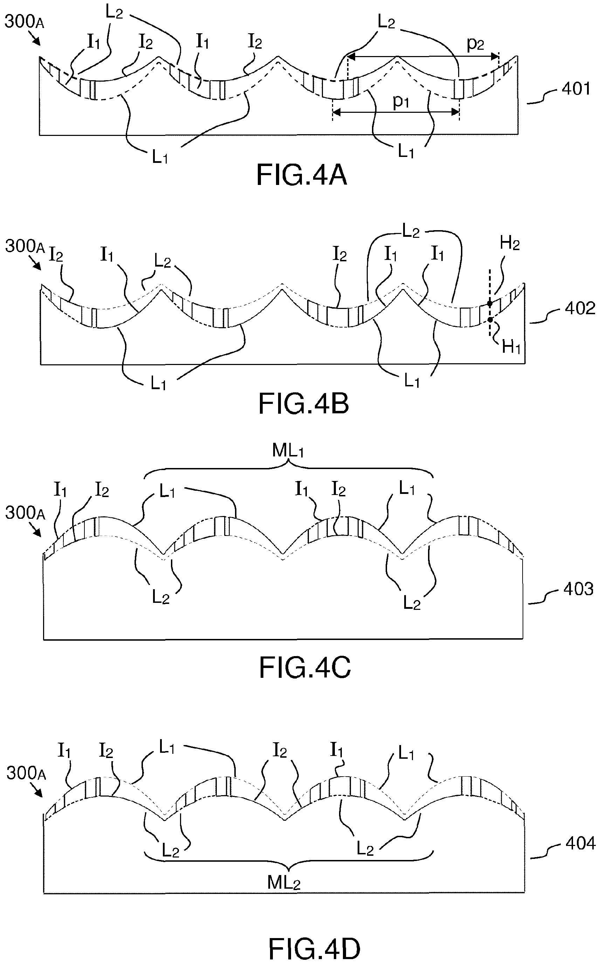

Les FIGS. 4A à 4D représentent schématiquement et selon des vues de coupe, des exemples 401 ― 404 de l'interface réflective entre la première couche en matériau diélectrique 313 et la deuxième couche réfléchissante 314, dans un composant optique selon la présente description. Dans ces exemples, on a indiqué par une flèche 300_{A} la position d'une première face d'observation, sachant que comme expliqué précédemment, il est possible dans certains exemples de réalisation d'observer le composant optique de sécurité selon les deux côtés recto et verso.

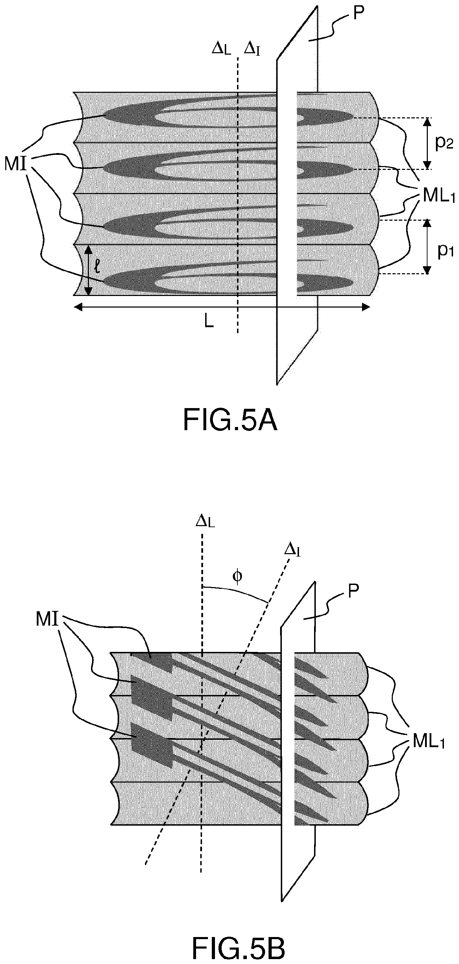

Les FIGS. 5A et 5B représentent schématiquement et selon des vues de dessus, deux exemples d'interfaces réflectives d'un composant optique de sécurité selon la présente description. Le plan P schématise un plan de coupe pour la représentation des interfaces en vue de coupe telles qu'illustrées sur les FIGS 4A à 4D. La face observée sur les FIGS. 5A et 5B est la première face d'observation 300_{A} représentée sur les FIGS. 4A à 4D.

Comme illustré sur les FIGS. 4A à 4D, l'interface réflective est formée de premières surfaces élémentaires I₁ et de deuxièmes surfaces élémentaires I₂ dont les contours, en vue de dessus, sont complémentaires.

Les premières surfaces élémentaires I₁ sont courbes et suivent le profil d'une première matrice ML₁ à une dimension de premières microlentilles cylindriques identiques L₁ identiques entre elles, lesdites surfaces courbes L₁ étant agencées périodiquement selon une première direction Δ_{L} (FIG. 5A, 5B), avec une première période p₁.

Les deuxièmes surfaces élémentaires I₂ sont courbes également, et présentent en tout point, ou pour la quasi-totalité des points, un rayon de courbure strictement supérieur à celui de ladite première matrice ML₁ au niveau de ce point. Ainsi, comme illustré sur la FIG. 4B le rayon de courbure en un point H₂ d'une deuxième surface élémentaire I₂ est strictement supérieur au rayon de courbure de la première surface courbe L₁ mesuré au point H₁ pris à la verticale du point H₂.

Comme illustré sur les FIGS. 4A à 4D, les deuxièmes surfaces élémentaires I₂ suivent le profil d'une deuxième matrice ML₂ à une dimension de deuxièmes microlentilles cylindriques L₂ identiques entre elles, superposée à la première matrice ML₁ de premières microlentilles cylindriques. Les deuxièmes microlentilles cylindriques L₂ sont ainsi agencées périodiquement selon ladite première direction, avec ladite première période p₁.

Dans l'exemple des FIGS. 4A et 4B, les premières et deuxièmes microlentilles cylindriques sont concaves vues de la première face d'observation 300_{A} et dans l'exemple des FIGS. 4C et 4D, les premières et deuxièmes microlentilles cylindriques sont convexes vues de la première face d'observation.

En pratique, les premières et deuxièmes microlentilles cylindriques L₁ et L₂ sont par exemple des tronçons de cylindres obtenus en faisant translater une courbe selon une génératrice. La génératrice des cylindres est perpendiculaire à ladite première direction d'agencement des microlentilles cylindriques. La courbe peut être par exemple de forme circulaire, parabolique, ou quelconque.

Une dimension L des microlentilles cylindriques (figure 5A), mesurée dans une direction parallèle à la génératrice des cylindres (et donc non déformée par mouvement de tilt du composant optique de sécurité), est par exemple supérieure à 1 mm, avantageusement supérieure à 2 mm, avantageusement supérieure à 5 mm, pour former des effets visuels visibles à l'œil nu.

Une largeur λ des microlentilles cylindriques, mesurée dans une direction perpendiculaire à la génératrice des cylindres (et donc déformée par mouvement de tilt du composant optique de sécurité), est avantageusement inférieure à 300 µm, pour ne pas être visible à l'œil nu. Par contre, un nombre suffisant de microlentilles cylindriques peut être prévu pour que la dimension totale de la première structure, mesurée dans une direction parallèle à la première direction Δ_{L} d'agencement des microlentilles cylindriques soit supérieure à 1 mm, avantageusement supérieure à 2 mm, avantageusement supérieure à 5 mm, pour former des effets visuels visibles à l'œil nu.

Selon la présente description, les premières surfaces élémentaires I₁ ou les deuxièmes surfaces élémentaires I₂ présentent des contours formant, en vue de dessus, des micro-images reconnaissables et identiques, agencées périodiquement selon une deuxième direction et avec une deuxième période p₂.

Ainsi, dans l'exemple de la FIG. 5A, les micro-images, ici des « 6 », sont agencées selon une direction Δ_{I} colinéaire à la direction Δ_{L} des microlentilles L₁ et avec une période p₂ différente de la période p₁ de la matrice de microlentilles ML₁.

Dans l'exemple de la FIG. 5B, les micro-images, dans cet exemple des « R », sont agencées selon une deuxième direction Δ_{I} non colinéaire avec la première direction Δ_{L} des micro lentilles L₁. Un angle φ entre lesdites premières et deuxièmes directions Δ_{L} et Δ_{I.} est par exemple compris entre compris entre 0,1 degrés et 5 degrés, avantageusement entre 0,1 degrés et 3 degrés.

D'autres configurations (non représentées sur les figures) sont possibles. Dans tous les cas, la non correspondance de la matrice de microlentilles et de la matrice de micro-images permet de former un composant optique qui présente en réflexion et sous l'effet d'un mouvement de tilt autour d'un axe perpendiculaire à ladite première direction, un grossissement et un déplacement desdites premières micro-images par grossissement de Moiré.

Les FIGS. 4A à 4D sont plus précisément obtenues à partir d'un plan de coupe (plan P) de l'exemple illustré sur la FIG. 5A.

Sur la FIG. 4A, ce sont les premières surfaces élémentaires I₁ de l'interface qui présentent des contours formant, en vue de dessus, les micro-images « 6 » visibles sur la FIG. 5A. Dans cet exemple, les premières surfaces élémentaires I₁ suivent le profil d'une première matrice ML₁ de premières microlentilles cylindriques L₁ et les deuxièmes surfaces élémentaires I₂ suivent le profil d'une deuxième matrice ML₂ de deuxièmes microlentilles cylindriques L₂ dont le rayon de courbure en un point donné est strictement supérieur à celui du rayon de courbure des microlentilles cylindriques L₁. Autrement dit, les deuxièmes microlentilles cylindriques L₂ apparaissent plus planes (moins courbes) que les premières microlentilles cylindriques L₁ et lors d'un mouvement de tilt autour d'un axe perpendiculaire à la première direction d'agencement des microlentilles ML₁, un observateur pourra observer vue de la première face d'observation 300_{A} une réflexion en provenance des deuxièmes surfaces élémentaires I₂ plus lumineuse mais dans une gamme angulaire plus faible, que la réflexion en provenance des premières surfaces élémentaires I₁. Comme ce sont les premières surfaces élémentaires I₁ qui présentent les contours formant, en vue de dessus, les micro-images reconnaissables « 6 », les images agrandies par grossissement de Moiré apparaitront moins intenses pour un observateur qu'un « fond » plus lumineux. On parle ici d'images visibles « en négatif ».

Au contraire, dans le cas de la FIG. 4B, ce sont les deuxièmes surfaces élémentaires I₂ qui présentent les contours formant, en vue de dessus, les micro-images reconnaissables « 6 ». Les images agrandies par grossissement de Moiré apparaîtront plus intenses pour un observateur qu'un fond moins lumineux. On parle ici d'images visibles « en positif ».

Dans le cas de la FIG. 4C, ce sont également les deuxièmes surfaces élémentaires I₂ qui présentent les contours formant, en vue de dessus, les micro-images reconnaissables « 6 ». Les images agrandies par grossissement de Moiré apparaitront donc plus intenses pour un observateur qu'un fond moins lumineux. Il s'agit donc ici encore d'images visibles « en positif ».

Au contraire, dans la FIG. 4D, ce sont les premières surfaces élémentaires I₁ qui présentent les contours formant, en vue de dessus, les micro-images reconnaissables « 6 ». Les images agrandies par grossissement de Moiré apparaitront donc moins intenses pour un observateur qu'un fond plus lumineux et formeront des images visibles « en négatif ».

Comme cela apparaît sur les FIGS. 4A à 4D ou 3A et 3B, du fait de la différence de courbure entre les premières microlentilles cylindriques et les deuxièmes microlentilles cylindriques, la différence de hauteur entre les première et deuxièmes matrices ML₁ et ML₂, mesurée selon une direction perpendiculaire au plan du composant, varie entre 0 et une différence de hauteur maximale h_{I}. La différence de hauteur maximale h_{I} est par exemple comprise entre 400 nm et 10 µm, de préférence entre 600 nm et 3 µm, en fonction de la différence de courbure entre les premières microlentilles cylindriques et les deuxièmes microlentilles cylindriques.

Comme expliqué en référence à la FIG. 3B, il est possible de prévoir une nano-structuration, soit des premières surfaces élémentaires I₁, soit des deuxièmes surfaces élémentaires I₂., une telle nano-structuration différenciée entre les premières surfaces élémentaires I₁ et les deuxièmes surfaces élémentaires I₂ permettant encore d'améliorer le contraste entre les images et le fond.

Par exemple, comme cela apparaît sur la FIG. 3B, les premières surfaces élémentaires et/ou les deuxièmes surfaces élémentaires (dans cet exemple les deuxièmes surfaces élémentaires) sont nanostructurées de telle sorte à former un réseau mono ou bidimensionnel.

Par exemple, la période est comprise entre 100 nm et 700 nm, avantageusement entre 200 nm et 500 nm, et la profondeur de modulation hₘ avantageusement comprise entre 50 nm et 300 nm. Un tel réseau dit « sub longueur d'onde », est déterminé pour produire, après dépôt de la deuxième couche réflective, un filtre résonant dans une première bande spectrale.

En pratique, on cherchera à ce que la différence de hauteur maximale h_{I} entre ladite première matrice de premières microlentilles cylindriques et ladite deuxième matrice de deuxièmes microlentilles cylindriques soit inférieure à 200 fois ladite profondeur de modulation hₘ du réseau mono ou bidimensionnel « sub longueur d'onde ».

Par exemple, la deuxième couche réflective 314 est métallique, adaptée pour former des résonances plasmoniques à l'interface entre ladite première couche en matériau diélectrique et ladite deuxième couche métallique. La couche métallique est suffisamment épaisse et des effets visuels colorés sont visibles en réflexion. De telles résonances plasmoniques sont décrites par exemple dans la demande de brevet FR 2982038 au nom de la déposante.

Selon un autre exemple, la deuxième couche réflective 314 est métallique, fine, et encapsulée entre deux couches en matériau diélectrique 313, 315, de telle sorte à former des résonances plasmoniques aux interfaces métal/diélectrique. Des effets visuels colorés sont visibles en transmission. De telles résonances plasmoniques sont décrites par exemple dans la demande de brevet FR 2973917 au nom de la déposante.

Selon un autre exemple, le composant optique de sécurité comprend en outre une troisième couche 315 d'encapsulation en matériau diélectrique, et la deuxième couche réflective 314 est une couche en matériau diélectrique, agencée entre lesdites première et troisième couches en matériau diélectrique, présentant un indice de réfraction différent de celui desdites première et troisième couches en matériau diélectrique, adaptée pour former des résonances de type guide d'onde dans ladite première bande spectrale. Les différences entre les valeurs d'indice de réfraction de ladite deuxième couche en matériau diélectrique et desdites première et troisième couches avoisinantes sont au moins égales à 0,3, avantageusement au moins égales à 0,5. De telles résonances de type guide d'onde sont décrites par exemple dans la demande de brevet US 4484797.

Dans tous les cas, une nano structuration des premières ou des deuxièmes surfaces élémentaires de l'interface sous forme d'un réseau mono ou bidimensionnel permet de former un effet de fond ou d'image colorée et d'améliorer encore le contraste fond/image.

Selon un autre exemple de réalisation (non représentée sur les figures), les premières surfaces élémentaires et/ou les deuxièmes surfaces élémentaires sont nanostructurées pour former une nanostructure diffusante. Une nano structuration diffusante des premières ou des deuxièmes surfaces élémentaires de l'interface permet d'améliorer encore le contraste fond/image.

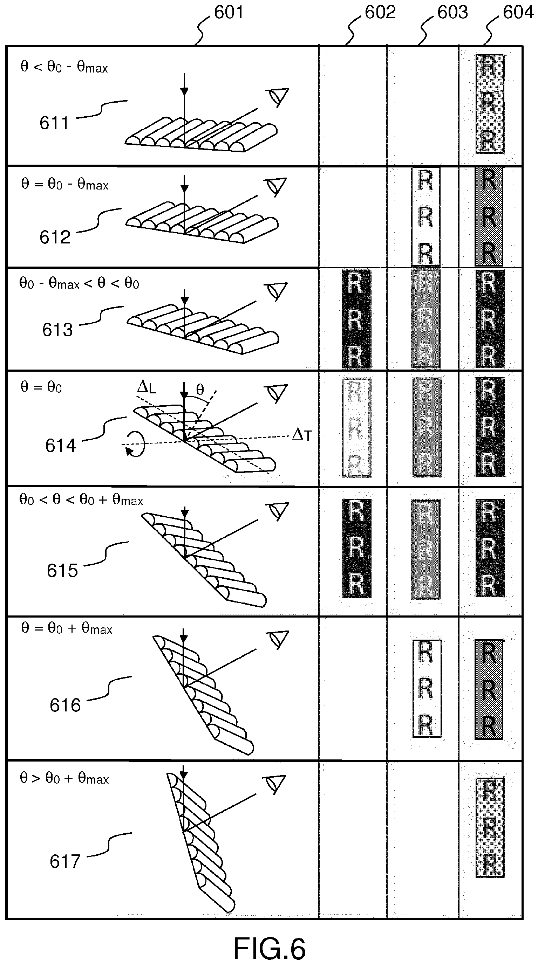

La FIG. 6 illustre par des schémas des effets visuels comparatifs entre un composant optique de sécurité fonctionnant selon le principe de l'état de l'art (colonne 602) et des exemples de composants optiques de sécurité selon la présente description (colonnes 603, 604).

Plus précisément, la colonne 602 représente des effets visuels en fonction de l'angle de tilt pour un composant optique de sécurité du type de celui représenté sur la FIG. 2B mais dans lequel les microlentilles sphériques sont remplacées par des microlentilles cylindriques. La colonne 603 représente des effets visuels en fonction de l'angle de tilt pour un composant optique de sécurité du type de celui représenté sur la FIG. 4C (microlentilles cylindriques convexes vu de la face d'observation et images visibles « en positif ») et la colonne 604 représente des effets visuels en fonction de l'angle de tilt pour un composant optique de sécurité du type également du type de celui représenté sur la FIG. 4C mais avec une nano-structuration des premières surfaces réflectives (« fond »).

On suppose dans cet exemple que les microlentilles cylindriques du composant choisi pour illustrer les effets visuels selon l'état de l'art dans la colonne 602 sont identiques aux premières lentilles cylindriques du composant choisi dans les colonnes 603, 604. La colonne 601 sur la FIG. 6 représente de façon schématisé un composant optique de sécurité dans différentes positions de tilt (lignes 611 à 617), c'est-à-dire pour différents angles de rotation du composant autour d'un axe Δ_{T}, perpendiculaire à la direction Δ_{L} des microlentilles cylindriques ou parallèle à la génératrice des cylindres formant microlentilles cylindriques.

La ligne 614 correspond à une position nominale d'observation, définie dans cet exemple pour une observation sous éclairage vertical (symbolisé par une flèche vers le bas sur les figures), et pour un composant incliné de telle sorte que l'observation (symbolisée par un œil d'un observateur) se fasse en réflexion spéculaire. On peut définir un angle de tilt θ entre la direction d'éclairage (verticale dans cet exemple) et la normale au composant. Dans la position nominale d'observation (ligne 614), l'angle de tilt vaut alors θ = θ₀.

Dans le cas d'un composant optique de sécurité fonctionnant selon le principe de l'état de l'art (colonne 602), lors de la réflexion spéculaire (ligne 614), le fond qui forme un miroir renvoie un maximum de lumière incidente vers l'observateur (fond « blanc »). Les microlentilles cylindriques structurées avec les micro-images (ici en forme de R) renvoient aussi un maximum de lumière du fait que la lentille est assimilable sur le dessus à une surface plane. Le contraste est donc quasiment nul à la réflexion spéculaire. Quand on s'éloigne de la réflexion spéculaire, le fond devient immédiatement « noir » ; par contre, les images formées gardent une bonne luminosité pour l'observateur, du moins dans une gamme d'anges de tilt θ tel que θ₀ - θₘₐₓ < θ < θ₀ (ligne 613) et tel que θ₀ < θ < θ₀ + θₘₐₓ (ligne 615), où θₘₐₓ est l'angle au-delà duquel la réflexion par les microlentilles cylindriques n'est plus visible par l'observateur. L'angle θₘₐₓ dépend de la courbure des microlentilles cylindriques et des conditions d'observation dans la position nominale d'observation. La déposante a constaté ainsi qu'il y a une rupture forte de contraste entre la réflexion spéculaire (contraste quasiment nul) et de part et d'autre de la réflexion spéculaire (contraste très fort), pour des angles de tilt compris dans une gamme d'angles donnée définie par θₘₐₓ.

Dans le premier exemple d'un composant optique de sécurité selon la présente description fonctionnant selon le principe de la FIG. 4C (colonne 603), lors de la réflexion spéculaire (ligne 614), à la fois le « fond » défini ici par les premières surfaces élémentaires (I₁, FIG. 4C) et les images définies par les deuxièmes surfaces élémentaires (I₂, FIG. 4C) apparaissent lumineuses pour l'observateur. Cependant, la luminosité des images est plus grande que celle du fond, du fait que la courbure des deuxièmes surfaces élémentaires est plus faible que celle des premières surfaces élémentaires (surfaces plus planes). Un observateur voit donc les images lumineuses sur fond plus sombre sur toute une gamme d'angles définie par θ₀ - θₘₐₓ < θ < θ₀ + θₘₐₓ (lignes 613, 614, 615). Pour des angles de tilt égaux à θ₀ + θₘₐₓ ou θ₀ - θₘₐₓ (lignes 612, 616), la réflexion par les deuxièmes surfaces élémentaires (moins courbes que les premières surfaces élémentaires) n'est plus visible. Les images deviennent noires tandis que le « fond » reste lumineux, puis s'éteint également (lignes 611, 617).

Ainsi, avec un composant optique de sécurité selon la présente description, l'effet de mouvement des images agrandies est ininterrompu, c'est-à-dire sans « accident » de contraste à la réflexion spéculaire, cet effet résultant des courbures non nulles et différentes des premières surfaces élémentaires et des deuxièmes surfaces élémentaires.

Ce même effet est observé avec un composant optique de sécurité qui présente en outre une nano-structuration des premières ou deuxièmes surfaces élémentaires (voir colonne 604). Dans cet exemple, la nano-structuration du « fond » (premières surfaces élémentaires) permet d'augmenter le contraste entre le fond et les images, par exemple grâce à un effet coloré (effet diffractif, effet plasmonique ou de guide d'onde) ou grâce à un effet diffusant. Par ailleurs, un contraste reste visible sur des plages angulaires plus grandes, ceci étant du aux effets de diffraction à des ordres supérieurs des réseaux ou aux effets de diffusion.

Par exemple, on pourra chercher un angle de tilt maximal θₘₐₓ typiquement de +/-45°, de préférence +/- 30° de la position nominale d'observation θ₀.

Le procédé de fabrication de composants optiques de sécurité selon la présente description comprend avantageusement les étapes suivantes.

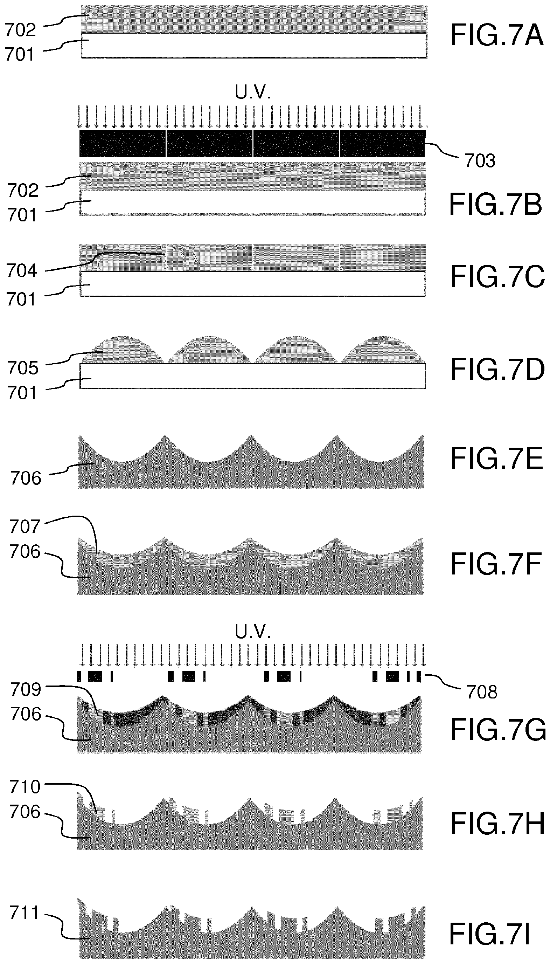

La première structure optique pour former l'interface structurée du composant optique de sécurité selon la présente description peut être enregistrée par photolithographie sur un support photosensible (ou « photorésist » selon l'expression anglo-saxonne), par exemple selon des étapes décrites au moyen des FIGS. 7A ― 7I, ou par lithographie par faisceau d'électrons. Une étape de galvanoplastie permet de reporter la structure optique dans un matériau résistant par exemple à base de Nickel pour réaliser une matrice ou « master » métallique comportant la structure optique. La fabrication du composant optique de sécurité comprend alors une étape de réplication. Par exemple la réplication peut être réalisée par estampage (par pressage à chaud du matériau diélectrique en anglais « hot embossing ») de la première couche 313 (FIGS. 3A, 3B) en matériau diélectrique d'indice de réfraction n₁, par exemple une couche de bas indice, typiquement un vernis d'estampage de quelques microns d'épaisseur. La couche 313 est avantageusement portée par le film support 311, par exemple un film de 10 µm à 100 µm en matériau polymère, par exemple en PET (polyéthylène téréphtalate). La réplication (mode préféré) peut également être faite par moulage de la couche de vernis d'estampage avant séchage puis réticulation UV (« UV casting »). La réplication par casting permet notamment de reproduire des structures présentant une grande amplitude de profondeur et permet d'obtenir une meilleure fidélité dans la réplication. De manière générale, toute autre méthode de réplication de haute résolution connue de l'art antérieur peut être utilisée dans l'étape de réplication. Vient ensuite le dépôt sur la couche ainsi embossée de l'ensemble des autres couches, notamment la couche réfléchissante 314, la couche d'encapsulation 315 (optionnelle), la couche de contraste colorée opaque 316 (optionnelle) qui peut être déposée uniformément ou imprimée pour figurer un nouveau motif et la couche de type colle ou vernis (317, 318) par un procédé d'enduction ou un vernis réticulable sous UV, par exemple.

Les FIGS 7A à 7I illustrent un exemple de procédé d'enregistrement de la première structure par photolithographie sur un support photosensible.

Le procédé d'enregistrement comprend une première étape (7A) de dépôt d'une couche de résine photosensible positive 702 sur un support 701. Un masque 703 permet une insolation (U. V.) des lignes qui définiront les bords 704 des microlentilles cylindriques (étape 7B). La résine insolée est développée (7C) puis une étape dite de « refusion » (ou « reflow » selon l'expression anglo-saxonne permet de former les premières microlentilles cylindriques 705 (étape 7D). Un moule 706 est alors formé par électroformage (étape 7E), le moule prenant la forme de la première matrice de premières microlentilles cylindriques. Un dépôt contrôlé de résine photosensible positive 707 est effectué (étape 7F) typiquement par centrifugation. Ce dépôt contrôlé permet de former la deuxième matrice de deuxièmes microlentilles cylindriques dont la courbure est automatiquement plus faible que celle de la première matrice. Dans l'étape 7G, les micro-images sont insolées dans la résine photosensible 707 grâce à un masque 708, permettant de former des éléments insolés 709. Les micro-images sont insolées en « positif » ou en « négatif ». Le développement de la résine insolée (étape 7H) permet la formation des deuxièmes surfaces élémentaires 710 de l'interface. Un moule 711 est alors formé par électroformage (étape 7I), le moule prenant la forme de la deuxième matrice de deuxièmes microlentilles cylindriques imbriquées dans la première matrice de premières microlentilles cylindriques.

Pour l'enregistrement d'une première structure avec des nano structurations, le procédé décrit ci-dessus pourra par exemple comprendre, entre les étapes 7E et 7F, les étapes additionnelles suivantes : dépôt de photorésine positive, insolation des nanostructures, développement de la résine insolée et création du moule par électroformage.

Bien que décrit à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique de sécurité destiné à être observé en réflexion, à l'œil nu, selon au moins une première face d'observation (300A), comprenant :
- une première couche (313) en matériau diélectrique, au moins partiellement transparente dans le visible, présentant un premier indice de réfraction (n₁),
- une deuxième couche réflective (314) formant une interface réflective avec ladite première couche dans au moins une première région,
dans lequel :
- ladite interface réflective comprend au moins une première structure optique avec des premières surfaces élémentaires (I₁) et des deuxièmes surfaces élémentaires (I₂), les contours desdites premières et deuxièmes surfaces élémentaires étant complémentaires en vue de dessus,
- les premières surfaces élémentaires (I₁) suivent le profil d'une première matrice (ML₁) à une dimension de premières microlentilles cylindriques identiques entre elles (L₁), agencées périodiquement selon une première direction (Δ_{L}), avec une première période (p₁);
- les deuxièmes surfaces élémentaires (I₂) suivent le profil d'une deuxième matrice (ML₂) à une dimension de deuxièmes microlentilles cylindriques identiques entre elles (L₂), superposée à ladite première matrice (ML₁), la courbure desdites deuxièmes microlentilles cylindriques étant inférieure à celles desdites premières microlentilles cylindriques;
- lesdites premières surfaces élémentaires (I₁) ou lesdites deuxièmes surfaces élémentaires (I₂) présentent des contours formant, en vue de dessus, des micro-images (MI) reconnaissables et identiques, agencées périodiquement selon une deuxième direction et avec une deuxième période, le composant optique présentant en réflexion et sous l'effet d'un mouvement de tilt autour d'un axe perpendiculaire à ladite première direction, un grossissement et un déplacement desdites premières micro-images par grossissement de Moiré.

2. Composant optique selon la revendication 1, dans lequel une largeur maximale desdites premières et deuxièmes microlentilles cylindriques, mesurée selon ladite première direction d'agencement, est inférieure à 300 µm.

3. Composant optique selon l'une quelconque des revendications précédentes, dans lequel une longueur minimale desdites premières et deuxièmes microlentilles cylindriques, mesurée dans une direction perpendiculaire à ladite première direction d'agencement, est supérieure à 1 mm.

4. Composant optique selon l'une quelconque des revendications précédentes, dans lequel une largeur minimale de ladite première structure, mesurée selon ladite première direction d'agencement, est supérieure à 1 mm.

5. Composant optique selon l'une quelconque des revendications précédentes, dans lequel une hauteur (h_{S}) de ladite première structure, mesurée dans une direction perpendiculaire au plan du composant, est comprise entre 2 µm et 20 µm.

6. Composant optique selon l'une quelconque des revendications précédentes, dans lequel une différence de hauteur (h_{I}) maximale entre ladite première matrice de microlentilles cylindriques et ladite deuxième matrice de microlentilles cylindriques, mesurée dans une direction perpendiculaire au plan du composant, est comprise entre 400 nm et 10 µm.

7. Composant optique de sécurité selon l'une quelconque des revendications précédentes, dans lequel lesdites première et deuxième directions sont colinéaires et lesdites première et deuxième périodes sont différentes.

8. Composant optique de sécurité selon l'une quelconque des revendications 1 à 6, dans lequel ladite deuxième direction présente un angle non nul avec ladite première direction.

9. Composant optique de sécurité selon l'une quelconque des revendications précédentes, dans lequel au moins lesdites premières surfaces élémentaires (I₁) ou lesdites deuxièmes surfaces élémentaires (I₂) sont nanostructurées de telle sorte à former au moins un premier réseau mono ou bidimensionnel.

10. Composant optique selon la revendication 9, dans lequel ledit réseau mono ou bidimensionnel présente une période comprise entre 100 nm et 700 nm, et est déterminé pour produire, après dépôt de la deuxième couche réflective (314), un filtre résonant dans au moins une première bande spectrale.

11. Composant optique de sécurité selon l'une quelconque des revendications 1 à 8, dans lequel lesdites premières surfaces élémentaires (I₁) ou lesdites deuxièmes surfaces élémentaires (I₂) sont nanostructurées pour former une nanostructure diffusante.

12. Composant optique selon l'une quelconque des revendications précédentes, dans lequel ladite deuxième couche réflective (314) est une couche métallique.

13. Composant optique selon l'une quelconque des revendications 1 à 11, dans lequel ladite deuxième couche réflective (314) est une couche en matériau diélectrique, présentant un indice de réfraction différent de celui des couches avoisinantes.

14. Composant optique de sécurité selon l'une quelconque des revendications précédentes, présentant en outre une troisième couche d'encapsulation en matériau diélectrique (315), ladite deuxième couche réflective (314) étant encapsulée entre lesdites première et troisième couches.

15. Composant optique de sécurité selon l'une quelconque des revendications précédentes, observable selon une deuxième face d'observation, opposée à ladite première face d'observation (300A).

16. Procédé de fabrication d'un composant optique de sécurité selon l'une quelconque des revendications précédentes, le procédé comprenant :
- le dépôt sur un film support (311) de ladite première couche en matériau diélectrique (313) ;
- la formation par réplication sur ladite première couche de ladite au moins première structure ;
- le dépôt sur ladite première couche en matériau diélectrique (313) structurée d'une couche réflective (314) pour former ladite interface réflective.

## Patentansprüche

1. Optische Sicherheitskomponente, welcher von mindestens einer ersten Betrachtungsseite (300A) aus mit dem bloßen Auge bei Reflexion sichtbare ist, mit
- einer ersten Schicht (313) aus dielektrischem Material, die im sichtbaren Bereich zumindest teilweise transparent ist, mit einem ersten Brechungsindex (n₁),
- einer zweiten, reflektierenden Schicht (314), welche in mindestens einem ersten Bereich eine reflektierende Grenzfläche mit der ersten Schicht bildet, wobei:
- die reflektierende Grenzfläche mindestens eine erste optische Struktur mit ersten elementaren Flächen (I₁) und zweiten elementaren Flächen (I₂) aufweist, wobei die Konturen der ersten und zweiten elementaren Flächen in Draufsicht komplementär sind,
- die ersten elementaren Flächen (I₁) dem Profil einer ersten Matrix (ML₁) mit einer Abmessung erster, untereinander identischer zylindrischer Mikrolinsen (L₁) folgen, die mit einer ersten Periode (p1) in einer ersten Richtung (Δ₁) periodisch angeordnet sind;
- die zweiten elementaren Flächen (I₂) dem Profil einer zweiten Matrix (ML₂) mit einer Abmessung zweiter, untereinander identischer zylindrischer Mikrolinsen (L₂) folgen, die der ersten Matrix (ML₁) überlagert ist, wobei die Krümmung der zweiten zylindrischen Mikrolinsen geringer als diejenige der ersten zylindrischen Mikrolinsen ist;
- die ersten elementaren Flächen (I₁) oder die zweiten elementaren Flächen (I₂) Konturen aufweisen, welche in Draufsicht erkennbare und identische Mikrobilder bilden, welche periodisch in einer zweiten Richtung und mit einer zweiten Periode angeordnet sind, wobei die optische Komponente bei Reflexion und unter dem Effekt einer Kippbewegung um eine zu der ersten Richtung senkrechte Achse eine Vergrößerung und einer Verschiebung der ersten Mikrobilder durch eine Moire-Vergrößerung aufweist.

2. Optische Komponente nach Anspruch 1, bei welcher eine maximale Breite der ersten und zweiten zylindrischen Mikrolinsen, gemessen in der ersten Anordnungsrichtung, kleiner als 300 µm ist.

3. Optische Komponente nach einem der vorhergehenden Ansprüche, bei welcher eine minimale Länge der ersten und zweiten zylindrischen Mikrolinsen, gemessen in einer zu der ersten Ausrichtungsrichtung senkrechten Richtung, größer als 1 mm ist.

4. Optische Komponente nach einem der vorhergehenden Ansprüche, bei welcher eine minimale Breite der ersten Struktur, gemessen in der ersten Anordnungsrichtung, größer als 1 mm ist.

5. Optische Komponente nach einem der vorhergehenden Ansprüche, bei welcher eine Höhe (h_{S}) der ersten Struktur, gemessen in einer zur Ebene der Komponente senkrechten Richtung, zwischen 2 µm und 20 µm beträgt.

6. Optische Komponente nach einem der vorhergehenden Ansprüche, bei welcher eine maximale Höhendifferenz (h₁) zwischen der ersten zylindrischen Mikrolinsenmatrix und der zweiten zylindrischen Mikrolinsenmatrix, gemessen in einer zur Ebene der Komponente senkrechten Richtung, zwischen 400 nm und 10 µm beträgt.

7. Optische Sicherheitskomponente nach einem der vorhergehenden Ansprüche, bei welcher die erste und die zweite Richtung kollinear sind und die erste und die zweite Periode voneinander verschieden sind.

8. Optische Sicherheitskomponente nach einem der Ansprüche 1 bis 6, bei welcher die zweite Richtung einen von Null verschiedenen Winkel zu der ersten Richtung aufweist.

9. Optische Sicherheitskomponente nach einem der vorhergehenden Ansprüche, bei welcher mindestens eine der ersten elementaren Flächen (I₁) oder der zweiten elementaren Flächen (I₂) derart nanostrukturiert sind, dass sie mindestens ein erstes ein- oder zweidimensionales Gitter bilden.

10. Optische Komponente nach Anspruch 9, bei welcher das ein- oder zweidimensionale Gitter eine Periode zwischen 100 nm und 700 nm aufweist und dazu bestimmt ist, nach dem Aufbringen einer zweiten reflektierenden Schicht (314), einen Filter zu bilden, der zumindest in einem ersten Spektralband in Resonanz gerät.

11. Optische Sicherheitskomponente nach einem der Ansprüche 1 bis 8, bei welcher die ersten elementaren Flächen (I₁) oder die zweiten elementaren Flächen (I₂) zur Bildung einer streuenden Nanostruktur nanostrukturiert sind.

12. Optische Komponente nach einem der vorhergehenden Ansprüche, bei welcher die zweite reflektierende Schicht (314) eine metallische Schicht ist.

13. Optische Komponente nach einem der Ansprüche 1 bis 11, bei welcher die zweite reflektierende Schicht (314) eine Schicht aus dielektrischem Material ist, die einen Brechungsindex aufweist, der von demjenigen der benachbarten Schichten verschieden ist.

14. Optische Sicherheitskomponente nach einem der vorhergehenden Ansprüche, ferner mit einer dritten Kapselungsschicht aus dielektrischem Material (315), wobei die zweite reflektierende Schicht (314) zwischen der ersten und der dritten Schicht eingekapselt ist.

15. Optische Sicherheitskomponente nach einem der vorhergehenden Ansprüche, welche von einer zweiten Betrachtungsseite aus sichtbar ist, die der ersten Betrachtungsseite (300A) entgegengesetzt ist.

16. Verfahren zur Herstellung einer optischen Sicherheitskomponente nach einem der vorangehenden Ansprüche, wobei das Verfahren aufweist:
- Aufbringen der ersten Schicht aus dielektrischem Material (313) auf einen Trägerfilm (311),
- Bilden mindestens der ersten Struktur auf der ersten Schicht durch Replikation,
- Aufbringen einer reflektierenden Schicht (314) auf der ersten strukturierten Schicht aus dielektrischem Material (313), um die reflektierende Grenzfläche zu bilden.

## Claims

1. An optical security component intended to be observed in reflection, with the naked eye, via at least a first observation face (300A), comprising:
- a dielectric first layer (313) that is at least partially transparent in the visible and that has a first refractive index (n₁),
- a reflective second layer (314) that forms a reflective interface with said first layer in at least a first region,
wherein:
- said reflective interface comprises at least a first optical structure with first elementary surfaces (I₁) and second elementary surfaces (I₂), the contours of said first and second elementary surfaces being complementary seen from above,
- the first elementary surfaces (I₁) follow the profile of a first one-dimensional array (ML₁) of first cylindrical microlenses (L₁) that are identical to one another and periodically arranged in a first direction (Δ₁), with a first period (p₁);
- the second elementary surfaces (I₂) follow the profile of a second one-dimensional array (ML₂) of second cylindrical microlenses (L₂) that are identical to one another, said second array being superposed on said first array (ML₁), the curvature of said second cylindrical microlenses being lower than those of said first cylindrical microlenses;
- said first elementary surfaces (I₁) or said second elementary surfaces (I₂) have contours forming, seen from above, recognizable and identical micro-images (MI) arranged periodically in a second direction and with a second period, the optical component generating, in reflection and under the effect of a tilting movement about an axis perpendicular to said first direction, a magnification and a movement of said first micro-images via Moire magnification.

2. The optical component according to Claim 1, wherein a maximum width of said first and second cylindrical microlenses, measured in said first direction of arrangement, is smaller than 300 µm.

3. The optical component according to either one of the preceding claims, wherein a minimum length of said first and second cylindrical microlenses, measured in a direction perpendicular to said first direction of arrangement, is larger than 1 mm.

4. The optical component according to any one of the preceding claims, wherein a minimum width of said first structure, measured in said first direction of arrangement, is larger than 1 mm.

5. The optical component according to any one of the preceding claims, wherein a height (hₛ) of said first structure, measured in a direction perpendicular to the plane of the component, is comprised between 2 µm and 20 µm.

6. The optical component according to any one of the preceding claims, wherein a maximum height difference (h_{I}) between said first array of cylindrical microlenses and said second array of cylindrical microlenses, measured in a direction perpendicular to the plane of the component, is comprised between 400 nm and 10 µm.

7. The optical security component according to any one of the preceding claims, wherein said first and second directions are collinear and said first and second periods are different.

8. The optical security component according to any one of the Claims 1 to 6, wherein said second direction makes a non-zero angle to said first direction.

9. The optical security component according to any one of the preceding claims, wherein at least said first elementary surfaces (I₁) or said second elementary surfaces (I₂) are nanostructured in such a way as to form at least a first one- or two-dimensional grating.

10. The optical component according to Claim 9, wherein said one- or two-dimensional grating has a period comprised between 100 nm and 700 nm, and is defined to produce, after deposition of the second reflective layer (314), a resonant filter in at least a first spectral band.

11. The optical security component according to any one of Claims 1 to 8, wherein said first elementary surfaces (I₁) or said second elementary surfaces (I₂) are nanostructured to form a scattering nanostructure.

12. The optical component according to any one of the preceding claims, wherein said reflective second layer (314) is a metal layer.

13. The optical component according to any one of Claims 1 to 11, wherein said reflective second layer (314) is a dielectric layer having a refractive index different from that of the neighbouring layers.

14. The optical security component according to any one of the preceding claims, further comprising an encapsulating dielectric third layer (315), said reflective second layer (314) being encapsulated between said first and third layers.

15. The optical security component according to any one of the preceding claims and observable via a second observation face opposite said first observation face (300A).

16. A method for manufacturing an optical security component according to any one of the preceding claims, the method comprising:
- depositing, on a carrier film (311), said dielectric first layer (313);
- forming, via replication, on said first layer, said at least a first structure;
- depositing, on said structured dielectric first layer (313), a reflective layer (314), to form said reflective interface.
